# EUROPEAN PATENT APPLICATION

(11) **EP 0 816 249 A1**
(43) Date of publication of application: **07.01.1998**
(21) Application number: 97201735.4
(22) Date of filing: 09.06.1997
(51) Int. Cl.: B65D 55/02, B65D 41/62, G06K 19/04, B67B 7/16

(54) **Registration element**

(30) Priority: 10.06.1996 NL 1003306
(71) Applicant: Koenders, Andreas Albertus Maria, 3998 JP Schalkwijk (NL)
(72) Inventor: Koenders, Andreas Albertus Maria, 3998 JP Schalkwijk (NL)
(74) Representative: Jilderda, Anne Ayolt

(57) **Abstract**

A registration element (1) is described for the identification and registration of bottles (9) closed by means of crown caps (10). This registration element (1) substantially comprises a body (2) which is substantially open at its lower side, a fixation member (5) which is accommodated in the cavity of the body (2), and electronic control means. The placement of the body (2) and the fixation member (5) is such that, owing to a cooperation between the registration element (1) and a bottle (9) closed with a crown cap (10), the upper portion of the neck of the bottle (9) together with the crown cap (10) is held in the hollow body (2) and the fixation member (5) is located below the lower rim of the crown cap (10). A movement of the registration element (1) in upward vertical direction is blocked by the fixation element (5) abutting against the lower rim of the crown cap (10). It is impossible to remove the registration element (10) from the bottle by hand in this configuration.

A device (16) is also described serving for the registration of the registration element (1) and for the removal thereof, together with the crown cap (10), from a bottle (9).

## Description

The invention relates to a registration element for the identification and registration of bottles closed with crown caps.

Bottles closed with crown caps in general comprise bottles with drinks which are sold in the catering industry. The crown cap can be removed from the bottle in a manner which is simple and generally known. It is a disadvantage for owners of pubs and the like, however, that no satisfactory registration of the number of bottles opened and sold takes place. The lack of such a registration is found to lead to the opening and consumption of a comparatively large number of bottles without payment being received for them.

There is accordingly a demand for a registration of the numbers and types of bottles of drinks sold. The present invention has for its object to provide a solution to the above problem and therefore provides a registration element for the identification and registration of bottles closed with crown caps, comprising a substantially hollow body which is substantially open at its lower side, a fixation member which is accommodated in the hollow space of said body, and electronically readable registration means, such that upon cooperation between the registration element and a bottle closed with a crown cap the upper portion of the neck of the bottle with the crown cap is enclosed in the hollow body and at least part of the fixation member is placed below the lower rim of the crown cap so that a movement of the registration element in vertical upward direction is blocked by the fixation member abutting against the lower rim of the crown cap.

Since the fixation member lies below the lower rim of the crown cap and the fixation member substantially bears on the upper side of the neck of the bottle, it is achieved that a fixation of the registration element on the bottle takes place, while at the same time it is rendered impossible to remove the fixation member from the closed bottle without special tools. The registration element is placed as a hood over the bottle with the crown cap such that neither the crown cap nor the registration element can be removed from the bottle without the use of a suitable device. On the other hand, the registration element is so shaped that, when it is removed from the bottle by means of a suitable device, the crown cap will be removed from the bottle along with it.

Although various embodiments of the fixation element are conceivable, the fixation element comprises in particular a substantially cylindrical, annular element with projecting members which extend in a direction towards the upper side of the registration element. Preferably, these projecting members comprise dentate elements.

Such dentate elements render possible a support of the lower side of the crown cap, while they are also suitable for removing the crown cap from the bottle in cooperation with a suitable device.

Preferably, the projecting members are substantially flat at their upper sides. This flat shape of the upper sides offers a support to the lower side of the crown cap, while it is ensured that, when the registration element and the crown cap are removed by means of a device suitable for this purpose, the ends of the projecting members remain undamaged, i.e. do not break off.

In an advantageous embodiment, the body of the registration element is provided with a substantially horizontal slot. When the registration element and the crown cap are removed from the bottle, the cap will remain inside the registration element on the fixation member owing to the fact that the diameter of the opening at the lower side has been reduced by the presence of the fixation member on the inside of the wall, so that the crown cap cannot drop from the registration element through the open bottom. The crown cap may be removed from the registration element in that it is passed through the slot.

In a special embodiment, the fixation member and the body are interconnected through the use of a flanged part. Such a flanged part may be present, for example, adjacent the lower side of the fixation member and the body. In a next embodiment, the fixation member, the wall, and the flanged part are formed as an integral whole. This is advantageous especially for the manufacture of the registration element.

Advantageously, the registration element, or the constituent parts thereof, is/are manufactured from a material chosen from a group comprising stainless steel, polypropylene, polyvinyl chloride, rubber, and nylon. It is obviously also possible to use other synthetic materials known to those skilled in the art.

Preferably, the fixation member is made from Ultem®. This material has a strength such that breaking off of the projecting members is practically impossible when a force is exerted on them.

The registration element may be open at the upper side. In that case, the crown cap can be removed not only through the slot after the removal of the registration element and the crown cap, but also through the upper side of the registration element. In an advantageous embodiment, however, the upper side of the registration element is closed.

In a further advantageous embodiment, the upper side of the registration element is closed by means of a detachably fastened closing element, while preferably electronic registration means are incorporated in said closing element.

The separate provision of a registration element and a closing element comprising electronic registration means renders it possible to manufacture universal registration elements in large quantities, while an idividual closing element which can be fastened on the registration element is made for each type of drink.

The present invention also relates to an assembly of a bottle closed with a crown cap and a registration element according to the invention.

As was noted above, the registration element cannot be manually removed from the assembly; this is only possible with the aid of a device specially designed for this purpose.

Therefore, the invention finally also relates to a device for registering the registration element described above and for removing it from a bottle together with the crown cap, which device comprises a hollow body which is open at least at one end and is provided with a substantially U-shaped recess for accommodating said registration element, and which device is provided with at least one sensor which is coupled to the registration means for registering the removed registration element.

It is possible by means of the device to remove a registration element together with the crown cap from the bottle in that the registration element is placed in the U-shaped recess and is pressed home therein, while the bottle is pulled back in a substantially curved movement. Since the registration element is as it were clamped in the U-shaped recess, it will be removed from the bottle. While the registration element is being removed, the crown cap will also be removed owing to the presence of the projecting members which exert a force on the lower side of the crown cap during the removal of the registration element. Registration of the registration element can take place thanks to the fact that the device has at least one sensor. This registration may take place when the assembly is being accommodated in the U-shaped recess, or alternatively after the registration element has been removed from the bottle and passes a certain point in the device. The registration may be coupled, for example, to the stock records so that a stock keeping control is generated thereby.

Advantageously, a second sensor is present in the device at a distance from the first sensor.

Thus a registration will not only take place when, for example, the assembly is placed in the recess, but also a second registration of, for example, the removed cap. A sensor placed at a distance from the recess has the advantage that it registers those registration elements which have actually been removed, whereas a sensor placed at the area of the recess also measures registration elements which are inadvertently placed in the recess and which are in actual fact not opened.

In a preferred embodiment, the hollow body of the device is curved adjacent the end having the recess, while the other end is in communication with a holder such that the registration element after being removed will drop through the body into the holder under the influence of the force of gravity.

The invention will be explained in more detail below with reference to the annexed drawing, in which:
- Fig. 1: is a diagrammatic side elevation of the registration element according to the invention;
- Fig. 2A: is a diagrammatic side elevation of a bottle with a crown cap;
- Fig. 2B: is a diagrammatic cross-sectional view of the bottle with the crown cap of Fig. 2A, surrounded by the registration element according to the invention;
- Fig. 3: diagrammaticaly shows the registration element according to the invention, partly in cross-section;
- Fig. 4: is a cross-section of the registration element taken on the line IV-IV in Fig. 1;
- Fig. 5: diagrammaticaly shows a closing element according to the invention;
- Fig. 6: is a diagrammatic partial side elevation of a device for the registration of a registration element; and
- Fig. 7: is another diagrammatic partial side elevation of the above device.

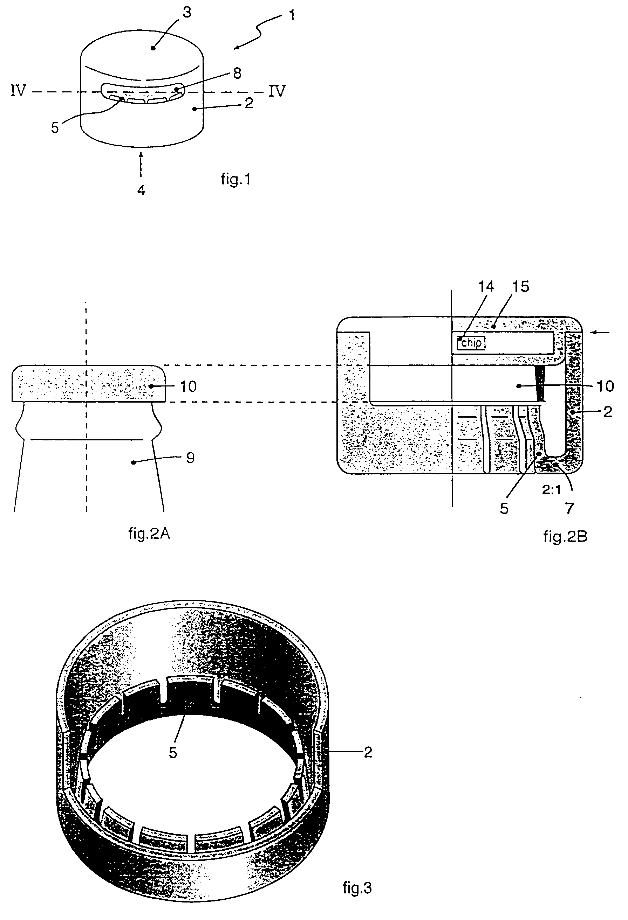

Fig. 1 shows the registration element 1 according to the present invention. The hollow body is referenced 2, and reference numerals 3 and 4 denote the upper and lower side thereof, respectively. The upper side 3 of the registration element may be open or closed. The body 2 of the registration element 1 is provided with a slot 8. A crown cap 10 removed from a bottle can be removed from the registration element 1 through this slot 8. Fig. 1 further shows part of the fixation member 5, the projecting members being visible here. The fixation member 5 will be explained in more detail with reference to the following Figures.

Fig. 2A is a diagrammatic side elevation of a bottle 9 with a crown cap 10. Fig. 2B is a cross-sectional view of the same bottle, but now surrounded by the registration element 1 according to the present invention. The registration element 1 is connected to the bottle in a manner which is manually indetachable when the registration element and the bottle are in engagement with one another. The registration element 1 can only be removed from the bottle 9 together with the crown cap 10 with the aid of a specially designed device 16. This device will be discussed in more detail further below. Fig. 2B shows an example of the fixation member 5. The fixation member 5 extends in a direction towards the upper side of the registration element 1. It is apparent from Fig. 2B that the fixation member 5 extends up to the lower rim of the crown cap 10, which in its turn rests on the upper side of the fixation member. It is achieved thereby that the registration element 1 is fixed on the bottle owing to the presence of the fixation member 5. It is alternatively possible for the fixation member 5 to extend up to some distance away from lower rim of the crown cap 10 so that, when the registration element 1 is moved in upward direction, a blocking action takes place in that the fixation member 5 abuts against the lower rim of the crown cap 10. Preferably, however, the fixation member 5 has a shape which lies against that of the bottle with which the registration element 1 is to cooperate. In the arrangement shown in Fig. 2B, accordingly, the fixation member 5 has a slight S-shape.

The embodiment of the registration element 1 shown in Fig. 2B is provided with a closing element 15 which comprises electronic registration means in the form of a chip 14. In Fig. 2B, the closing element 15 and the registration element 1 are two separate elements which are interconnected by means of, for example, a glue connection, a welded joint, or some other mechanical connection. It is also possible, however, to construct the registration element according to the present invention as an integral whole, the electronic registration means 14 being integrated into the registration element 1. This may be effected on the upper side of the registration element 1, but a position in the wall 2 thereof is also conceivable.

Fig. 3 diagrammatically shows a cross-section through the registration element 1 for the purpose of explaining the fixation member 5 in more detail. The fixation member 5 preferably comprises a cylindrical member or annular element with projecting elements in the form of dentate elements. Preferably, these dentate elements are flat at their upper sides so that they can offer resistance to the lower side of a crown cap resting on the upper sides of the dentate elements in the situation in which the registration element 1 is in engagement with the bottle with the crown cap. The flat shape of the upper sides of the dentate elements is additionally advantageous when the registration element is removed from the bottle together with the crown cap. During this, the dentate elements exert a force on the lower rim of the crown cap under the influence of the action of the opening device. Breaking off of the dentate elements is prevented by the flat shape of their upper sides. The latter advantage is further enhanced when the fixation member 5 is manufactured from a strong material, such as Ultem®.

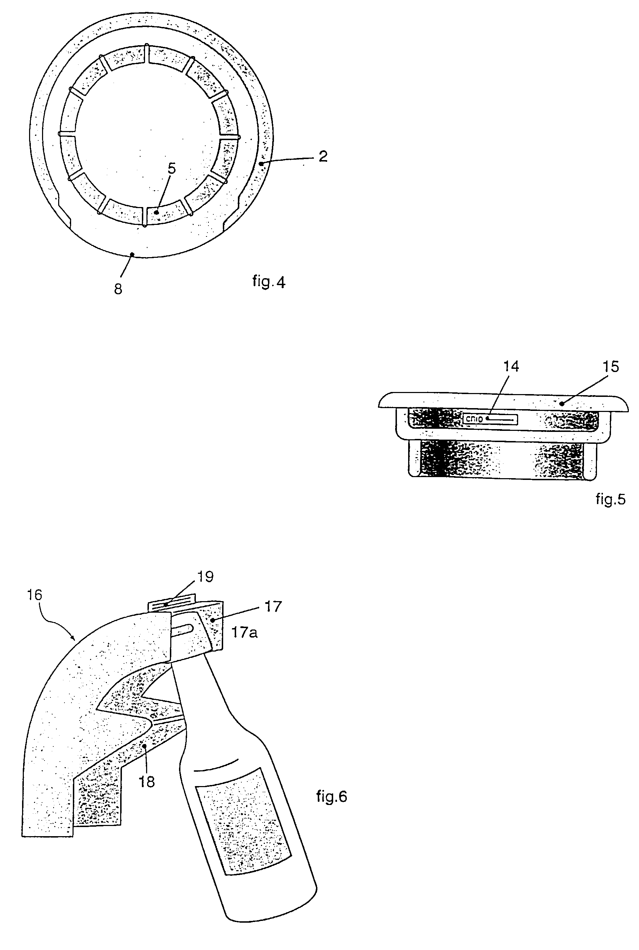

Fig. 4 shows a cross-section of the registration element 1 according to the present invention taken on the line IV-IV in Fig. 1. As is apparent, the wall 2 is interrupted at 8 by the presence of a slot. This slot serves for the removal of the crown cap from the registration element 1 after the former has been taken from the bottle.

Fig. 5 shows a loose closing element 15 which can be used for closing the registration element 1 according to the present invention. As was stated above, this closing element 15 may also be formed as an integral whole with the registration element 1 according to the present invention.

The placement of the registration element 1 on a bottle fitted with a crown cap may be mechanically effected in a simple manner. One possibility here is to fasten the registration element 1 with the electronic registration means 14 incorporated therein on the bottles for each type of drink. Another possibility is to accommodate the electronic registration means 14 in a detachably fastened closing element 15. In the latter case a registration element 1 can be provided on the bottle regardless of the contents thereof, whereupon the closing element 15 corresponding to the contents of the bottle is fastened. This second possibility has the advantage that the registration element itself can be provided irrespective of the type of drink, while merely a selection is to be made as regards the application of the specific closing element 15. The registration means 14 may be formed by, for example, a conventional chip card.

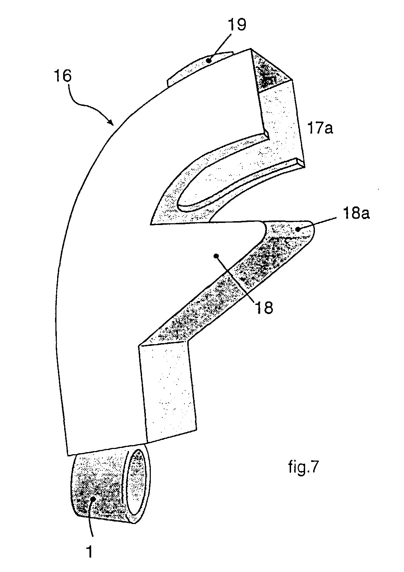

Fig. 6 shows a device according to the present invention for the removal and registration of a registration element 1 according to the present invention. The device 16 comprises a substantially elongate hollow body 17 which is preferably manufactured from metal or a hard synthetic resin. Adjacent one end, referenced 17a in Fig. 6, there is a U-shaped recess which is shown in more detail in Fig. 7, again referenced 17a. The registration element 1 according to the present invention, immovably connected to the crown cap 10 on a bottle 9, can be accommodated in this U-shaped recess. The U-shaped recess performs the function of a conventional opener and renders it possible to remove the registration element 1 together with the crown cap 10 from the bottle 9. The device 16 is also provided with a so-called countersupport body 18 against which the bottle can be supported during the process of opening. Advantageously, the end 18a of the countersupport body 18 comprises rubber so that the bottle will not become damaged when pressed against the countersupport body 18. At least one sensor 19 is present on the device, registering which type of drink is being opened and in what quantity. When a bottle is to be opened, the bottle 9 is placed with its crown cap 10 and the surrounding registration element 1 in the U-shaped recess of the device, and the registration element 1 together with the crown cap 10 is removed from the bottle 9 by means of a movement wherein the upper side of the bottle 9 and the registration element 1 are pressed into the U-shaped recess while the lower side of the bottle 9 is moved up along a substantially curved path. While the assembly of the bottle and the registration element is being inserted into the device 16, the sensor 19 registers which type of drink and what quantity will be opened. It is obviously also possible to place the sensor 19 at some distance from the end of the hollow body 17 so that the registration of the registration element will not take place until after the bottle has been opened, when the registration element 1 drops through the hollow body under the influence of the force of gravity. In an alternative embodiment, the device 16 is provided with several sensors, for example two sensors, the first one being positioned, for example, adjacent the recess, while the other one is placed at a distance from the recess and only registers registration elements 1 which have been removed from the bottles.

As Figs. 6 and 7 show, the end of the elongate hollow body 17 where the recess 17a is present has a curved shape, so that the recess is placed at the bottom of the opening and the bottle with the registration element 1 can be easily inserted into the recess. The curved portion of the hollow body merges into a straighter vertical portion, so that a registration element 1, once removed from a bottle, will drop down through the hollow body under the influence of the force of gravity.

Since the other end of the hollow body 17 is connected to a holder, the registration elements will drop into this holder. In the embodiment shown in Figs. 6 and 7, the device comprises only one end with a recess by means of which the registration elements can be registered and removed. It is obviously also possible to have a hollow body 17 issue into several hollow bodies each with an end provided with a recess, such that these several ends together issue into one hollow body which at the other end is connected to a holder. Several bottles may thus be opened and registered simultaneously, with the registration elements 1 all dropping into the same holder.

The sensor 19 provided in the device is connected to recording means which keep track of the number and types of the drinks opened. Preferably, these recording means are connected to the stock records so that the stock keeping is controlled by the registration elements.

Although the invention was explained in detail above with reference to only a limited number of embodiments, it will be obvious that the invention is by no means limited to the examples given. On the contrary, many more variations and designs will be possible to those skilled in the art without departing from the scope of the present invention.

Thus the fixation member need not be limited to the shape described in the embodiments, but it may have any shape which renders possible the fixation of the registration element on the bottle with the crown cap. This may comprise, for example, elements projecting in the direction of the central axis of the registration element, or means which cause a fixation of the registration element on the bottle by tightening.

Furthermore, the hollow body need not have the substantially cylindrical shape shown in the Figures but may also be made polygonal. At the same time, for example, an alternative embodiment of the device for registering the registration element may be used instead of the device shown in the embodiments above, not having the elongate shape shown but, for example, box-shaped or spherical.

## Claims

1. A registration element (1) for the identification and registration of bottles (9) closed with crown caps (10), comprising a substantially hollow body (2) which is substantially open at its lower side, a fixation member (5) which is accommodated in the hollow space of said body (2), and electronically readable registration means, such that upon cooperation between the registration element (1) and a bottle (9) closed with a crown cap (10) the upper portion of the neck of the bottle (9) with the crown cap (10) is enclosed in the hollow body (2) and at least part of the fixation member (5) is placed below the lower rim of the crown cap (10) so that a movement of the registration element (1) in vertical upward direction is blocked by the fixation member (5) abutting against the lower rim of the crown cap (10).

2. A registration element (1) as claimed in claim 1, wherein the fixation element (5) comprises a substantially cylindrical, annular element with projecting members which extend in a direction towards the upper side of the registration element (1).

3. A registration element (1) as claimed in claim 2, wherein the projecting members (5) comprise dentate elements.

4. A registration element (1) as claimed in claim 2 or 3, wherein the projecting members (5) are substantially flat at their upper sides.

5. A registration element (1) as claimed in any one or several of the preceding claims, wherein the body (2) is provided with a substantially horizontal slot (8).

6. A registration element (1) as claimed in any one or several of the preceding claims, wherein the fixation member (5) and the body (2) are interconnected by means of a flanged part (7).

7. A registration element (1) as claimed in any one or several of the preceding claims, wherein the fixation member (5), the body (2), and the flanged part (7) are formed as an integral whole.

8. A registration element (1) as claimed in any one or several of the preceding claims, wherein the element, or the constituent parts thereof, is/are manufactured from one or several materials chosen from a group comprising stainless steel, polypropylene, polyvinyl chloride, rubber, and nylon.

9. A registration element (1) as claimed in any one or several of the preceding claims, wherein the fixation member (5) is made from Ultem®.

10. A registration element (1) as claimed in any one or several of the preceding claims, wherein the upper side of the registration element is closed.

11. A registration element (1) as claimed in any one or several of the preceding claims, wherein the upper side of the registration element is closed by means of a detachably fastened closing element (15).

12. A registration element (1) as claimed in claim 11, wherein electronic registration means (14) are incorporated in said closing element (15).

13. An assembly of a bottle (9) closed by means of a crown cap (10) and a registration element (1) as claimed in any one or several of the claims 1 to 12.

14. A device (16) for registering a registration element as claimed in claims 1 to 12 and for removing it from a bottle (9) together with the crown cap (10), which device (16) comprises a hollow body (17) which is open at least at one end (17a) and is provided with a substantially U-shaped recess for accommodating said registration element (1) as claimed in the claims 1 to 12, and which device (16) is provided with at least one sensor (19) which is coupled to the registration means for registering the removed registration element (1).

15. A device as claimed in claim 14, wherein a second sensor is present in the device at a distance from the first sensor (19).

16. A device as claimed in claim 14 or 15, wherein the end of the body comprising the recess is curved, while the other end is in communication with a holder such that the registration element after being removed will drop through the body into the holder under the influence of the force of gravity.
